# EUROPEAN PATENT SPECIFICATION

(11) **EP 4 482 080 B1**
(45) Date of publication and mention of the grant of the patent: **08.10.2025**
(21) Application number: 23179993.3
(22) Date of filing: 19.06.2023
(51) Int. Cl.: H04L 9/40, H04W 12/77

(54) **SYSTEMS AND METHODS FOR TRANSFERRING A FILE FROM A TRUSTED DEVICE TO AN UNTRUSTED DEVICE**
SYSTEME UND VERFAHREN ZUR ÜBERTRAGUNG EINER DATEI VON EINER VERTRAUENSWÜRDIGEN VORRICHTUNG ZU EINER NICHT VERTRAUENSWÜRDIGEN VORRICHTUNG
SYSTÈMES ET PROCÉDÉS DE TRANSFERT D'UN FICHIER D'UN DISPOSITIF FIABLE À UN DISPOSITIF NON FIABLE

(43) Date of publication of application: 25.12.2024
(73) Proprietor: Droply GmbH, 72813 St. Johann (DE)
(72) Inventor: ROEKEN, Fabian, 72813 St. Johann (DE)
(74) Representative: Richly & Ritschel Patentanwälte PartG mbB

(56) References cited:
- QRCLIP.IO: "Transfer Files from Phone to a Computer with QR Codes", 4 May 2023 (2023-05-04), XP002810479, Retrieved from the Internet <URL:https://www.qrclip.io/blog/transfer-files-from-your-phone-to-a-computer-with-qr-codes> [retrieved on 20231110]
- QRCLIP.IO: "QRClip: Security White Paper", QRCLIP.IO, 10 July 2023 (2023-07-10), pages 1 - 22, XP093101321, Retrieved from the Internet <URL:https://cdn.qrclip.io/docs/QRClip-WhitePaper2023-07-10.pdf> [retrieved on 20231114]

## Description

### Technical field

The present disclosure relates generally to systems and methods for transferring a file from an untrusted device to a trusted device over a computer network without authenticating the un-trusted device. In particular, the present disclosure relates to methods and systems for using trusted devices to broker secure logins into websites from devices that may be insecure.

### Background

To send a file from an untrusted device to a trusted device it is usually required to authenticate the untrusted device and to provide it with login credentials.

Therefore, there exists the problem for a user, to securely send documents to any device without having to log into a cloud service or a similar device on those potentially insecure (i.e. untrusted) devices and disclose information about myself, or alternatively, forgo secure encrypted transmission.

The document grclip.io: "Transfer Files from Phone to a Computer with QR Codes", 4 May 2023 (2023-05-04), XP002810479,Retrieved from the Internet:URL:https://www.qrclip.io/blog/transfer-files-from-your-phone-to-a-computer-with-qr-codes [retrieved on 2023-11-10] ; in association with document Qrclip.Io: "QRClip: Security White Paper",qrclip.io,10 July 2023 (2023-07-10), pages 1-22, XP093101321,Retrieved from the Internet:URL:https://cdn.qrclip.io/ docs/QRClip-WhitePaper2023-07-10.pdf[retrieved on 2023-11-14] describe a secure file transfer service that uses QR codes and cryptographic techniques to ensure data privacy and security.

### Summary

The invention is defined by the appended claims.

Systems and methods are disclosed herein for a user to use a trusted mobile device to establish a connection to any arbitrary potentially unsecure (i.e. untrusted) device that supports a browser or provides a dedicated client program.

The connection is established without entering any login credentials on the unsecure device. Instead, the untrusted device registers itself in the mediator service (server). The mediator service provides a QR code which the untrusted device may show. A user running an application, that communicates with the mediator, on the trusted mobile device may scan the QR code to identify the untrusted device. The mediator may then provide the application a public key for encrypting data for the unsecure device. The user may then send encrypted documents and other data to the mediator. The unsecure device may in the background listen for documents and data on the mediator service, and download and decrypt them once available. The unsecure device may then show the document to the user, without knowing the trusted device the document came from.

The application on the trusted device may remember the documents provided to the client. When connecting to a different client, it may send the same documents to that different client. That way the trusted mobile device transfers document setups across devices.

Disclosed is a computer-implemented method for transferring a file from a trusted device to an untrusted device according to claim 1.

The at least one file can be a text, image, 3D-model, audio or/and video file. The text can be a message for the untrusted device.

The trusted device can be mobile station, mobile phone, tablet, mobile or stationary computer. The untrusted device can be mobile station, mobile phone, tablet, mobile or stationary computer, or electronic whiteboard. The server can be local or cloud-based server.

The connection between the trusted device, untrusted device server can be wired or unwired. Preferentially the connection is unwired.

The technical protocol for the connection between trusted device, server and untrusted device is not particularly limited. The connection be by predetermined intermittent (e.g. cyclic) requests, e.g. by TCP, or real-time requests, e.g.by WebSocket.

The advantages of the method are inter alia that it is carried in the case of multiple untrusted devices without establishing a connection between any of the multiple untrusted devices, thus enhancing the security of the method. Thus, the method is 1:n method with the trusted device being the "1" and the multiple untrusted devices being the "n". Thus, the multiple untrusted devices have no information on other untrusted devices within the multiple untrusted devices. Moreover, only the use of the trusted device decides which untrusted device can receive or send files to the trusted device. The untrusted devices cannot send files to other untrusted devices without the trusted device allowing the sending of files. In sum, the trusted devices controls which untrusted devices can receive or send files and the untrusted devices cannot communicate at their own volition with other untrusted devices.

The method may not comprise the provision of login credentials or information replacing login credentials allowing the un-trusted device to connect to any service, server, or other device. In particular, the method may not comprise a login into the untrusted device.

The method may further comprise that the untrusted device is acknowledging to the server that the file was received and in response the server deleting the at least one file on the server. The method may further comprise that the untrusted device is displaying the content of the at least one file on a display connected to or contained in the untrusted device.

The method may further comprise that the trusted device is sending a request to the server to delete the at least one file on the untrusted device,
the server is sending to the untrusted device the request to delete the at least one file, and
the untrusted device is deleting the at least one file.

The method may comprise that the server receives a request by at least one or more second devices to register as a client, and further comprising:
the server providing to the trusted device the untrusted device public keys and untrusted client IDs for each of the at least one or more second devices,
the trusted device providing a temporary secure keypair for a group comprising at least two of the untrusted client IDs,
the trusted device encrypting the private key of the group temporary secure keypair with the public keys of each untrusted device public keys, thereby creating a set of encrypted private keys of the group temporary secure keypair;
the trusted device encrypting the at least one file with the public key of the group temporary secure keypair,
the trusted device sending the group key encrypted at least one file to the server together with the untrusted device client IDs, the trusted device ID, the set of encrypted private keys of the group temporary secure keypair, and
each untrusted device decrypts the encrypted at least one file, with after decrypting the group private key.

The method may comprise that the step of the trusted device reading the QR code to extract the untrusted device client ID comprises:
the trusted device requests from the server to be registered as a trusted device client, the request containing the public key of the trusted device,
the server generating a client ID for the trusted device,
the server sending the trusted device a trusted device client ID to the trusted device,
the trusted device reading the QR code to extract the untrusted device client ID,
and wherein
the steps of the trusted device sending a file to the server together with the untrusted device client ID and
the server sending the at least one file to the untrusted device comprise the steps:
   the trusted device requesting and receiving the public key of the untrusted device,
   the trusted device encrypting the at least one file with the public key of the untrusted device,
   the trusted device sending the encrypted at least one file to the server together with the untrusted device client ID and the trusted device client ID,
   the server sending the encrypted at least one file to the un-trusted device, and
   the untrusted device decrypting the received at least one encrypted file with its private key comprising the trusted device client ID,
   the untrusted device requesting and receiving from the server the public key of the trusted device, the request containing the trusted device client ID,
   the untrusted device encrypting a second at least one file with the public key of the trusted device,
   the untrusted device sending the encrypted second at least one file to the server together with the trusted device client ID,
   the server sending the encrypted second at least one file to the trusted device, and
   the trusted device decrypting the received modified second at least one file with its private key comprising the trusted device client ID.

The method may comprise that wherein the step of the untrusted device requesting and receiving from the server the public key of the trusted device, the request containing the trusted device client ID, comprises:
providing on the untrusted device at least one modified version of the received at least one file, and
after modification of the decrypted at least one file the un-trusted device requesting and receiving from the server the public key of the trusted device, the request containing the trusted device client ID,
and wherein the second at least one file is the modified at least one file.

An application on the trusted device may be configured for receiving and sending the file.

Before sending the file from the server to the untrusted device the untrusted device may send a request to the server inquiring for files designated for the untrusted device and being identified by the untrusted device client ID.

Also disclosed is a data carrier carrying instructions, the instructions causing a computer system to perform the method described above.

Also disclosed is a computer system comprising the data carrier described, the instruction on data carrier causing the computer system to perform the method described above.

### Brief description of figures

Figure 1 displays a diagram showing the scenario where a QR code is used to establish a connection between a trusted mobile device (e.g., the teacher's tablet) and an untrusted device (e.g., the whiteboard in the classroom). No encryption takes place.
Figure 2 corresponds to Figure 1, but it also shows end-to-end encryption when sending data from the trusted mobile device.

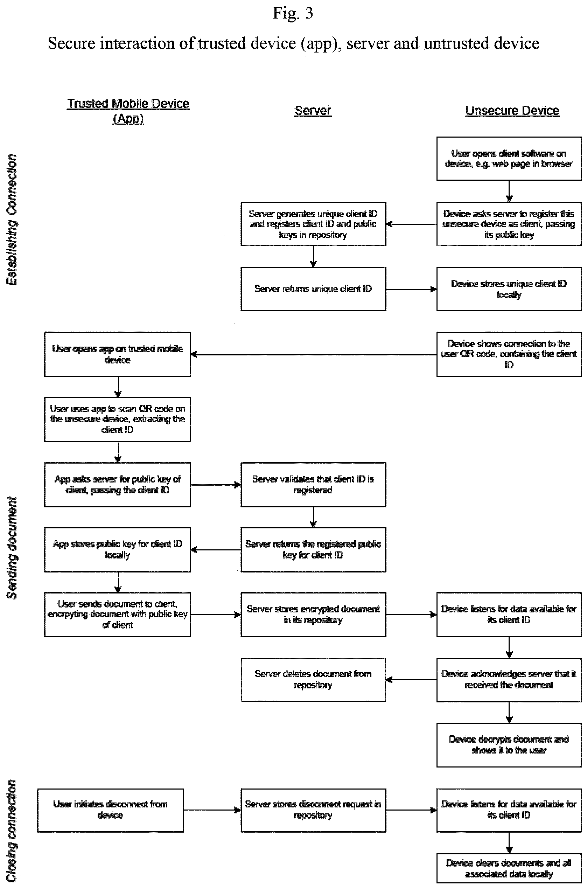

The diagram of Figure 3 illustrates the complete process from establishing the connection to sending the encrypted document to the termination of the connection. The diagram shows the interaction between the three components trusted (mobile device, e.g., tablet), server and untrusted device (e.g., whiteboard). The diagram shows that the server serves as the exchange medium. However, due to the end-to-end encryption, the server cannot do anything with the data stored on it.

The step of deleting the document on the server is optional and therefore grayed out. The
presence of this step defines whether the server keeps the data persistently or whether it discards the data after successful reception.

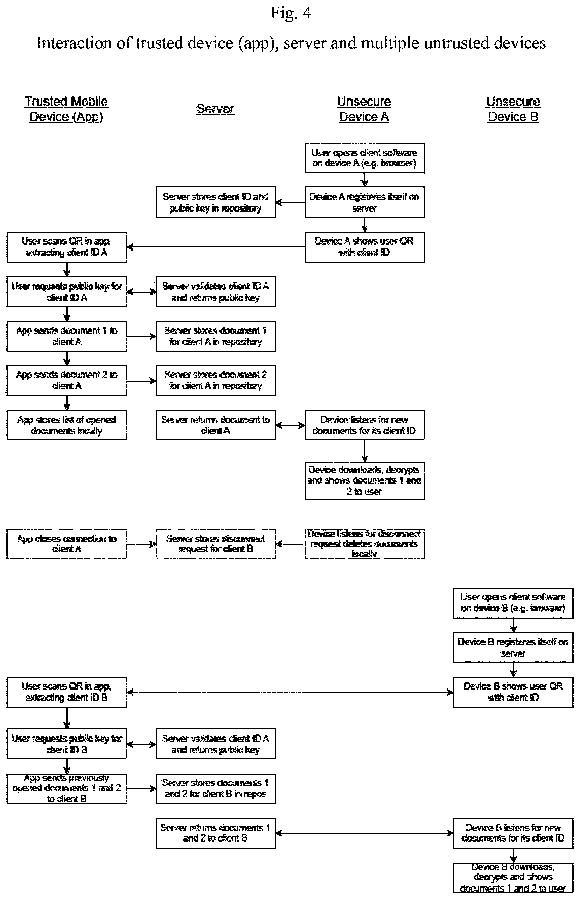

Figure 4 discloses the scenario displayed in figure 3 albeit with multiple in this case two untrusted device (e.g., whiteboard and student tablet) and sends two files to each of these devices. The files are encrypted for the untrusted device.

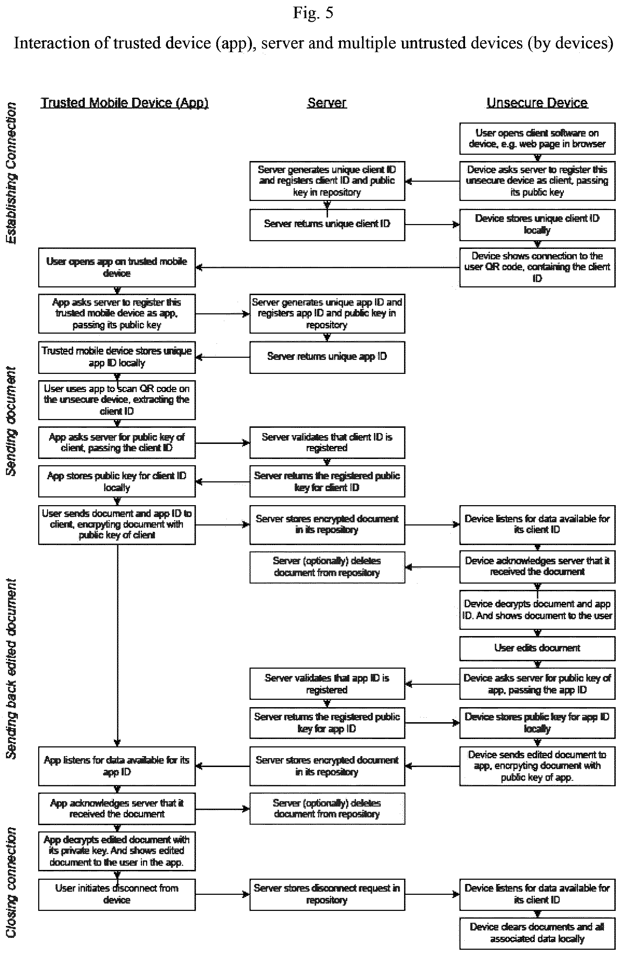

Figure 5 illustrates the scenario of figure 3 and shows the complete process from establishing a connection via encrypted sending of a file to the termination of the connection. In addition, however, it contains the process for the encrypted return of the processed file from the untrusted device to the trusted (mobile) device.

For example, the use case is that a teacher pushes a document from the tablet to the whiteboard, the teacher edits the document together with the class on the whiteboard, and then manually triggers that the document is send back to the tablet or the document is automatically transferred back to the tablet (backward) .

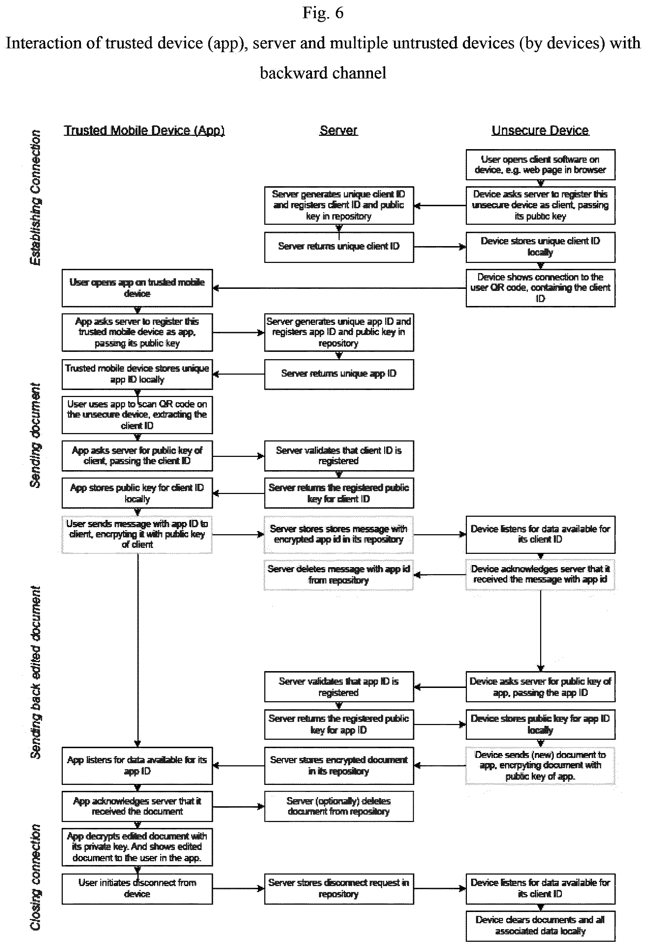

Figure 6 illustrates the scenario where the trusted device only sends its own client ID (without document), the untrusted device remembers this client ID and then at any later time can send files to the trusted device (from the untrusted device to the trusted device) via the client ID of the trusted device and the query of the trusted device -public key from the server - via the server.

In a nutshell, almost the same process as described in figure 5, only without the initial sending of a document from the trusted device.

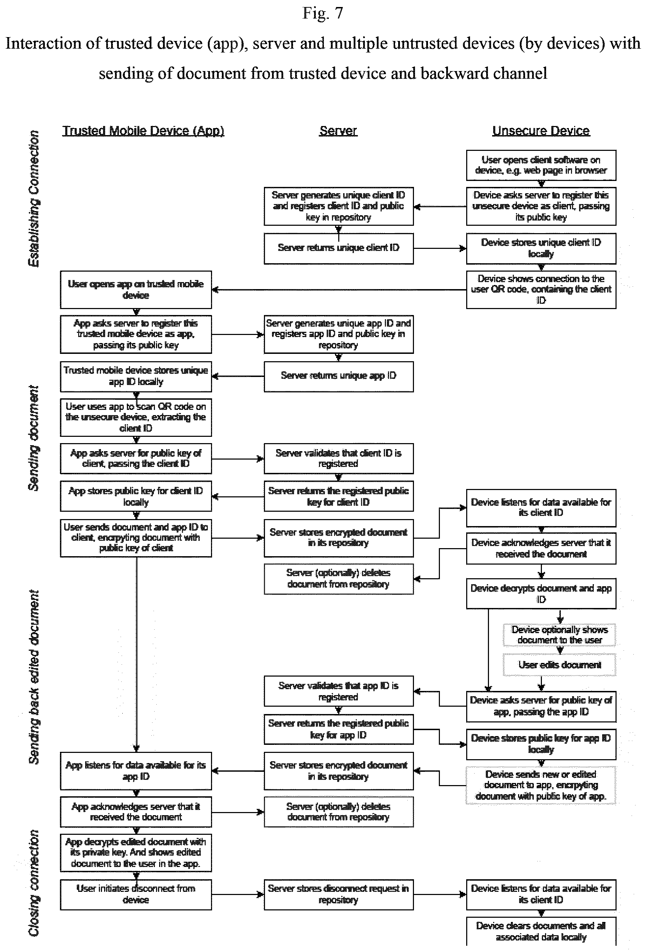

Figure 7 illustrates the combination of the scenarios of figure 5 and 6.

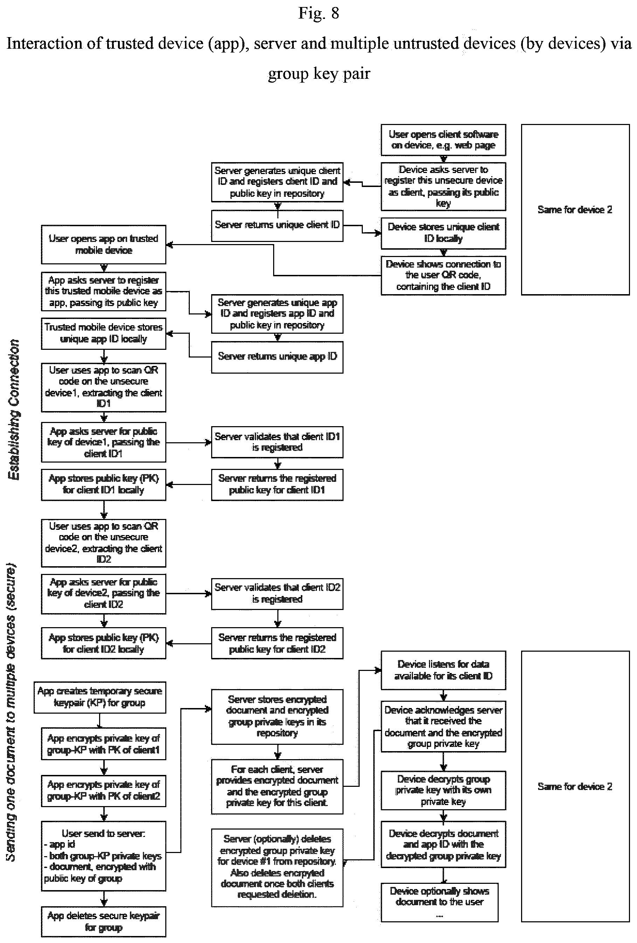

Figure 8 illustrates a preferred method for sending a file X to multiple untrusted devices. Use case would be that teacher wants to send a file end-to-end encrypted to multiple student tablets without uploading the file multiple times.

In particular, the trusted device creates a group key pair (public/private key). The trusted device encrypts the file with group public key. The trusted device encrypts the previously created group private key with the client's public key for each destination.

### Detailed description of figures

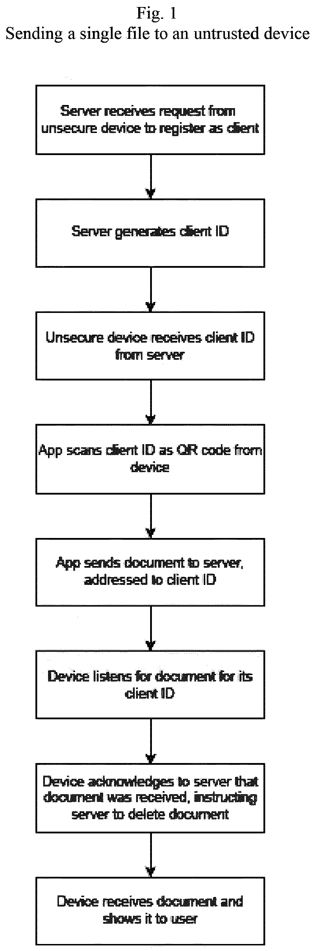

Figure 1 displays a diagram showing the scenario where a QR code is used to establish a connection between a trusted mobile device (e.g., the teacher's tablet) and an untrusted device (e.g., the whiteboard in the classroom). No encryption takes place.

Initially, a server receives a request from an untrusted device to register as client. In response, the server generates client ID identifying the untrusted device. The untrusted device receives its client ID. The trusted device, e.g. an application (app) on the trusted device, scans the client ID as QR code from the device and extracts the client ID of the untrusted device. The trusted device sends a file, e.g. a document, to the server addressed to the client ID. In the present case the untrusted device listens for a file designated with its client ID (alternatively, e.g., the server pushes the file to the untrusted device). The trusted device receives the file and optionally shows (displays) it to a user. The untrusted device can optionally acknowledge to the server that the file was received and optionally instructs the server to delete the file.

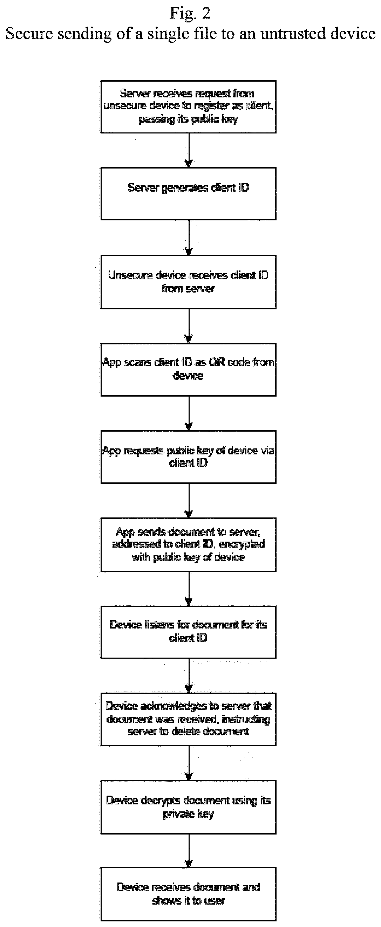

Figure 2 corresponds to Figure 1, but it also shows end-to-end encryption when sending data from the trusted (mobile) device.

Only the differences to the method illustrated in figure 1 are discussed. When a server receives a request from an untrusted device to register as client, the untrusted device also forwards its public key of public/private key pair to the server. After the trusted device extracted the client ID of the untrusted device it requests the public key of the untrusted device. When the trusted device sends a file, e.g. a document, to the server, it encrypts the file with the public key of the untrusted device. When the trusted device receives the file it decrypts the file using its private key.

The diagram of Figure 3 illustrates the complete process from establishing the connection to sending the encrypted document to the termination of the connection which was summarized in figure 2. The diagram shows the interaction between the three components trusted (mobile device, e.g., tablet), server and un-trusted device (e.g., whiteboard) in detail.

The diagram shows that the server serves as the exchange medium. However, due to the end-to-end encryption, the server cannot do anything with the data stored on it.

The step of deleting the document on the server is optional and therefore grayed out. The presence of this step defines whether the server keeps the data persistently or whether it discards the data after successful reception.

Figure 4 discloses the scenario displayed in figure 3 albeit with multiple in this case two un-trusted devices (e.g., white-board and student tablet) and sends two files to each of these devices. The files are encrypted for the untrusted device.

Figure 5 illustrates the scenario of figure 3 and shows the complete process from establishing a connection via encrypted sending of a file to the termination of the connection. In addition, however, it contains the process for the encrypted return of the processed file from the un-trusted device to the trusted (mobile) device.

For example, the use case is that a teacher pushes a document from the tablet to the white-board, the teacher edits the document together with the class on the whiteboard, and then manually triggers that the document is send back to the tablet or the document is automatically transferred back to the tablet (backward) .

This method differs from the method illustrated in figure 3 in that the trusted device or an app on the trusted device requests the server to be registered and passes its public key to the server. In response, the server generates a client ID for the trusted device (called app ID in figure 5). The decrypted file can be edited by the untrusted device and the untrusted device can request the public key of the trusted device by passing the trusted device client ID (app ID). The trusted device sends the edited file encrypted with the public key of the trusted device along with the trusted device ID to the server. The server forwards the encrypted and edited file the trusted device. The trusted device decrypts the encrypted and edited file with its private key.

Figure 6 illustrates the scenario where the trusted device only sends its own client ID (without document), the untrusted device remembers this client ID and then at any later time can send files to the trusted device (from the untrusted device to the trusted device) via the client ID of the trusted device and the query of the trusted device -public key from the server - via the server.

In a nutshell, almost the same process as described in figure 5, only without the initial sending of a document from the trusted device.

Figure 7 illustrates the combination of the scenarios of figure 5 and 6.

Figure 8 illustrates a preferred method for sending a file X to multiple untrusted devices. A use case would be that teacher wants to send a file end-to-end encrypted to multiple student tab-lets without uploading the file multiple times.

In particular, the trusted device creates a group key pair (public/private key). The trusted device encrypts the file with group public key. The trusted device encrypts the previously created group private key with the client's public key for each destination.

Where applicable, various embodiments provided by the present disclosure may be implemented using hardware, software, firmware, or combinations thereof. Also where applicable, the various hardware components, software components, and/or firmware components set forth herein may be combined into composite components comprising software, firmware, hardware, and/or all.

Where applicable, the various hardware components, software components, and/or firmware components set forth herein may be separated into sub-components comprising software, firmware, hardware, or all.

In addition, where applicable, it is contemplated that software components may be implemented as hardware components, and vice-versa.

Application software in accordance with the present disclosure, such as computer programs executed by a processor of the identity provider to generate/validate QR code, or by the trusted device to scan the QR code, may be stored on one or more computer readable mediums. It is also contemplated that the application software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

Although embodiments of the present disclosure have been described, these embodiments illustrate but do not limit the disclosure. For example, even though QR code is a mature technology with large information storage capacity, other code, symbols, text, or objects that may be recognized quickly and accurately by trusted devices may be used for the safe login or for the information request. For example, UPC code can be generated by the identity provider, which then can be scanned by the trusted device to accomplish the safe login process or the information request by the website server as discussed herein. It should also be understood that embodiments of the present disclosure should not be limited to these embodiments but that numerous modifications and variations may be made by one of ordinary skill in the art in accordance with the principles of the present disclosure as defined in the appended claims.

## Claims

1. A computer-implemented method for transferring a file from a trusted device to a untrusted device comprising:
a server receiving a request from the untrusted device to register as a client,
the server generating a client identification, ID, for the untrusted device,
the server sending the untrusted device client ID to the untrusted device,
the untrusted device displaying a quick response (QR) code corresponding to the client ID,
the trusted device reading the QR code to extract the client ID,
the trusted device sending at least one file to the server together with the untrusted device client ID,
the server sending the at least one file to the untrusted device,
wherein the at least one file is end-to-end encrypted, and wherein
the request from the untrusted device to register as a client further comprises the public key of the untrusted device, and wherein
the steps of the trusted device sending a file to the server together with the untrusted device client ID and
the server sending the at least one file to the untrusted device comprise the steps:
the trusted device requesting and receiving the public key of the untrusted device,
the trusted device encrypting the at least one file with the untrusted device public key,
the trusted device sending the encrypted at least one file to the server together with the untrusted device client ID,
the server sending the encrypted at least one file to the untrusted device, and
the untrusted device decrypting the received at least one encrypted file with its private key.

2. Method of claim 1, wherein the at least one file is a text, image, 3D-model, audio or/and video file.

3. The method of claims 2 or 3, wherein the method does not comprise the provision of login credentials or information replacing login credentials allowing the untrusted device to connect to any service, server, or other device, in particular, wherein the method does not comprise a login into the untrusted device.

4. The method of any of the above claims, further comprising the untrusted device acknowledging to the server that file was received and in response the server deleting the at least one file on the server.

5. The method of any of the above claims, further comprising the untrusted device displaying the content of the at least one file on a display connected to or contained in the untrusted device.

6. The method of any of the above claims, further comprising:
the trusted device sending a request to the server to delete the at least one file on the untrusted device,
the server sending to the untrusted device the request to delete the at least one file, and
the untrusted device deleting the at least one file.

7. The method of claim 1, wherein the server receives a request by at least one or more second devices to register as a client, and further comprising:
the server providing to the trusted device the untrusted device public keys and untrusted client IDs for each of the at least one or more second devices,
the trusted device providing a temporary secure keypair for a group comprising at least two of the untrusted client IDs,
the trusted device encrypting the private key of the group temporary secure keypair with the public keys of each un-trusted device public keys, thereby creating a set of encrypted private keys of the group temporary secure keypair;
the trusted device encrypting the at least one file with the public key of the group temporary secure keypair,
the trusted device sending the group key encrypted at least one file to the server together with the untrusted device client IDs, the trusted device ID, the set of encrypted private keys of the group temporary secure keypair, and
each untrusted device decrypts the encrypted at least one file, with after decrypting the group private key.

8. The method of claim 1, wherein
the step of the trusted device reading the QR code to extract the untrusted device client ID comprises:
the trusted device requests from the server to be registered as a trusted device client, the request containing the public key of the trusted device,
the server generating a client ID for the trusted device,
the server sending the trusted device a trusted device client ID to the trusted device,
the trusted device reading the QR code to extract the un-trusted device client ID,
and wherein
the steps of the trusted device sending a file to the server together with the untrusted device client ID and
the server sending the at least one file to the untrusted device comprise the steps:
the trusted device requesting and receiving the public key of the untrusted device,
the trusted device encrypting the at least one file with the public key of the untrusted device,
the trusted device sending the encrypted at least one file to the server together with the untrusted device client ID and the trusted device client ID,
the server sending the encrypted at least one file to the untrusted device, and
the untrusted device decrypting the received at least one encrypted file with its private key comprising the trusted device client ID,
the untrusted device requesting and receiving from the server the public key of the trusted device, the request containing the trusted device client ID,
the untrusted device encrypting a second at least one file with the public key of the trusted device,
the untrusted device sending the encrypted second at least one file to the server together with the trusted device client ID,
the server sending the encrypted second at least one file to the trusted device, and
the trusted device decrypting the received modified second at least one file with its private key comprising the trusted device client ID.

9. The method of claim 8, wherein
wherein the step of the untrusted device requesting and receiving from the server the public key of the trusted device, the request containing the trusted device client ID, comprises:
providing on the untrusted device at least one modified version of the received at least one file, and
after modification of the decrypted at least one file the untrusted device requesting and receiving from the server the public key of the trusted device, the request containing the trusted device client ID,
and wherein the second at least one file is the modified at least one file.

10. The method of any of the above claims, wherein an application on the trusted device is configured for receiving and sending the file.

11. The method of any of the above claims, wherein before sending the file from the server to the untrusted device the untrusted device sends a request to the server inquiring for files designated for the untrusted device and being identified by the untrusted device client ID.

12. A data carrier carrying instructions, the instructions causing a computer system to perform the method according to any of the above claims.

13. A computer system comprising the data carrier of claim 12, the instruction on data carrier causing the computer system to perform the method according to any of the above claims.

## Patentansprüche

1. Computerimplementiertes Verfahren zum Übertragen einer Datei von einer vertrauenswürdigen Vorrichtung auf eine nicht vertrauenswürdige Vorrichtung, umfassend:
ein Server empfängt eine Anforderung, sich als einen Client zu registrieren, von der nicht vertrauenswürdigen Vorrichtung,
der Server generiert eine Client-Identifikation, ID, für die nicht vertrauenswürdige Vorrichtung,
der Server sendet die Client-ID der nicht vertrauenswürdigen Vorrichtung an die nicht vertrauenswürdige Vorrichtung,
die nicht vertrauenswürdige Vorrichtung zeigt einen Quick-Response-Code (QR-Code) an, der der Client-ID entspricht,
die vertrauenswürdige Vorrichtung liest den QR-Code, um die Client-ID zu extrahieren,
die vertrauenswürdige Vorrichtung sendet mindestens eine Datei zusammen mit der Client-ID der nicht vertrauenswürdigen Vorrichtung an den Server,
der Server sendet die mindestens eine Datei an die nicht vertrauenswürdige Vorrichtung,
wobei die mindestens eine Datei Ende-zu-Ende-verschlüsselt ist und wobei
die Anforderung, sich als einen Client zu registrieren, von der nicht vertrauenswürdigen Vorrichtung ferner den öffentlichen Schlüssel der nicht vertrauenswürdigen Vorrichtung umfasst und wobei
die Schritte, bei denen die vertrauenswürdige Vorrichtung eine Datei zusammen mit der Client-ID der nicht vertrauenswürdigen Vorrichtung an den Server sendet und
der Server die mindestens eine Datei an die nicht vertrauenswürdige Vorrichtung sendet, die Schritte umfassen:
die vertrauenswürdige Vorrichtung fordert den öffentlichen Schlüssel der nicht vertrauenswürdigen Vorrichtung an und empfängt diesen,
die vertrauenswürdige Vorrichtung verschlüsselt die mindestens eine Datei mit dem öffentlichen Schlüssel der nicht vertrauenswürdigen Vorrichtung,
die vertrauenswürdige Vorrichtung sendet die verschlüsselte mindestens eine Datei zusammen mit der Client-ID der nicht vertrauenswürdigen Vorrichtung an den Server, der Server sendet die verschlüsselte mindestens eine Datei an die nicht vertrauenswürdige Vorrichtung und
die nicht vertrauenswürdige Vorrichtung entschlüsselt die empfangene mindestens eine verschlüsselte Datei mit ihrem privaten Schlüssel.

2. Verfahren nach Anspruch 1, wobei die mindestens eine Datei eine Text-, Bild-, 3D-Modell-, Audio- oder/und Videodatei ist.

3. Verfahren nach Anspruch 2 oder 3, wobei das Verfahren nicht die Bereitstellung von Anmeldedaten oder Informationen, die die Anmeldedaten ersetzen, umfasst, wobei der nicht vertrauenswürdigen Vorrichtung erlaubt wird, sich mit einem beliebigen Dienst, Server oder einer anderen Vorrichtung zu verbinden, insbesondere, wobei das Verfahren keine Anmeldung bei der nicht vertrauenswürdigen Vorrichtung umfasst.

4. Verfahren nach einem der obigen Ansprüche, ferner umfassend, dass die nicht vertrauenswürdige Vorrichtung dem Server bestätigt, dass die Datei empfangen wurde, und der Server als Reaktion darauf die mindestens eine Datei auf dem Server löscht.

5. Verfahren nach einem der obigen Ansprüche, ferner umfassend, dass die nicht vertrauenswürdige Vorrichtung den Inhalt der mindestens einen Datei auf einer Anzeige anzeigt, die mit der nicht vertrauenswürdigen Vorrichtung verbunden oder in dieser enthalten ist.

6. Verfahren nach einem der obigen Ansprüche, ferner umfassend: die vertrauenswürdige Vorrichtung sendet eine Anforderung, die mindestens eine Datei auf der nicht vertrauenswürdigen Vorrichtung zu löschen, an den Server,
der Server sendet die Anforderung, die mindestens eine Datei zu löschen, an die nicht vertrauenswürdige Vorrichtung und
die nicht vertrauenswürdige Vorrichtung löscht die mindestens eine Datei.

7. Verfahren nach Anspruch 1, wobei der Server eine Anforderung, sich als einen Client zu registrieren, durch mindestens eine oder mehrere zweite Vorrichtungen empfängt, und ferner umfassend:
der Server stellt der vertrauenswürdigen Vorrichtung die öffentlichen Schlüssel der nicht vertrauenswürdigen Vorrichtung und die nicht vertrauenswürdigen Client-IDs für jede der mindestens einen oder mehreren zweiten Vorrichtungen bereit,
die vertrauenswürdige Vorrichtung stellt ein temporäres sicheres Schlüsselpaar für eine Gruppe bereit, umfassend mindestens zwei der nicht vertrauenswürdigen Client-IDs,
die vertrauenswürdige Vorrichtung verschlüsselt den privaten Schlüssel des temporären sicheren Gruppenschlüsselpaars mit den öffentlichen Schlüsseln der öffentlichen Schlüssel jeder nicht vertrauenswürdigen Vorrichtung, wobei dadurch ein Satz von verschlüsselten privaten Schlüsseln des temporären sicheren Gruppenschlüsselpaars erstellt wird; die vertrauenswürdige Vorrichtung verschlüsselt die mindestens eine Datei mit dem öffentlichen Schlüssel des temporären sicheren Gruppenschlüsselpaars,
die vertrauenswürdige Vorrichtung sendet die mit einem Gruppenschlüssel verschlüsselte mindestens eine Datei zusammen mit den Client-IDs der nicht vertrauenswürdigen Vorrichtungen, der ID der vertrauenswürdigen Vorrichtung und dem Satz von verschlüsselten privaten Schlüsseln des temporären sicheren Gruppenschlüsselpaars an den Server und
jede nicht vertrauenswürdige Vorrichtung entschlüsselt die verschlüsselte mindestens eine Datei, mit, nach einem Entschlüsseln, dem privaten Gruppenschlüssel.

8. Verfahren nach Anspruch 1, wobei
der Schritt, bei dem die vertrauenswürdige Vorrichtung den QR-Code liest, um die Client-ID der nicht vertrauenswürdigen Vorrichtung zu extrahieren, umfasst:
die vertrauenswürdige Vorrichtung fordert von dem Server an, als ein Client der vertrauenswürdigen Vorrichtung registriert zu werden, wobei die Anforderung den öffentlichen Schlüssel der vertrauenswürdigen Vorrichtung enthält,
der Server generiert eine Client-ID für die vertrauenswürdige Vorrichtung, der Server sendet der vertrauenswürdigen Vorrichtung eine Client-ID der vertrauenswürdigen Vorrichtung,
die vertrauenswürdige Vorrichtung liest den QR-Code, um die Client-ID der nicht vertrauenswürdigen Vorrichtung zu extrahieren,
und wobei
die Schritte, bei denen die vertrauenswürdige Vorrichtung eine Datei zusammen mit der Client-ID der nicht vertrauenswürdigen Vorrichtung an den Server sendet und
der Server die mindestens eine Datei an die nicht vertrauenswürdige Vorrichtung sendet, die Schritte umfassen:
die vertrauenswürdige Vorrichtung fordert den öffentlichen Schlüssel der nicht vertrauenswürdigen Vorrichtung an und empfängt diesen,
die vertrauenswürdige Vorrichtung verschlüsselt die mindestens eine Datei mit dem öffentlichen Schlüssel der nicht vertrauenswürdigen Vorrichtung,
die vertrauenswürdige Vorrichtung sendet die verschlüsselte mindestens eine Datei zusammen mit der Client-ID der nicht vertrauenswürdigen Vorrichtung und der Client-ID der vertrauenswürdigen Vorrichtung an den Server,
der Server sendet die mindestens eine verschlüsselte Datei an die nicht vertrauenswürdige Vorrichtung und
die nicht vertrauenswürdige Vorrichtung entschlüsselt die empfangene mindestens eine verschlüsselte Datei mit ihrem privaten Schlüssel, umfassend die Client-ID der vertrauenswürdigen Vorrichtung,
die nicht vertrauenswürdige Vorrichtung fordert den öffentlichen Schlüssel der vertrauenswürdigen Vorrichtung von dem Server an und empfängt diesen, wobei die Anforderung die Client-ID der vertrauenswürdigen Vorrichtung enthält,
die nicht vertrauenswürdige Vorrichtung verschlüsselt eine zweite mindestens eine Datei mit dem öffentlichen Schlüssel der vertrauenswürdigen Vorrichtung,
die nicht vertrauenswürdige Vorrichtung sendet die verschlüsselte zweite mindestens eine Datei zusammen mit der Client-ID der vertrauenswürdigen Vorrichtung an den Server,
der Server sendet die verschlüsselte zweite mindestens eine Datei an die vertrauenswürdige Vorrichtung und
die vertrauenswürdige Vorrichtung entschlüsselt die empfangene geänderte zweite mindestens eine Datei mit ihrem privaten Schlüssel, umfassend die Client-ID der vertrauenswürdigen Vorrichtung.

9. Verfahren nach Anspruch 8, wobei
wobei der Schritt, bei dem die nicht vertrauenswürdige Vorrichtung den öffentlichen Schlüssel der vertrauenswürdigen Vorrichtung von dem Server anfordert und empfängt, wobei die Anforderung die Client-ID der vertrauenswürdigen Vorrichtung enthält, umfasst:
Bereitstellen mindestens einer geänderten Version der empfangenen mindestens einen Datei auf der nicht vertrauenswürdigen Vorrichtung und,
nach einer Änderung der entschlüsselten mindestens einen Datei, die nicht vertrauenswürdige Vorrichtung fordert den öffentlichen Schlüssel der vertrauenswürdigen Vorrichtung von dem Server an und empfängt diesen, wobei die Anforderung die Client-ID der vertrauenswürdigen Vorrichtung enthält,
und wobei die zweite mindestens eine Datei die geänderte mindestens eine Datei ist.

10. Verfahren nach einem der obigen Ansprüche, wobei eine Anwendung auf der vertrauenswürdigen Vorrichtung zum Empfangen und Senden der Datei konfiguriert ist.

11. Verfahren nach einem der obigen Ansprüche, wobei, vor dem Senden der Datei von dem Server an die nicht vertrauenswürdige Vorrichtung, die nicht vertrauenswürdige Vorrichtung eine Anforderung zum Abfragen von Dateien, die für die nicht vertrauenswürdige Vorrichtung bestimmt sind und durch die Client-ID der nicht vertrauenswürdigen Vorrichtung identifiziert werden, an den Server sendet.

12. Datenträger, der Anweisungen trägt, wobei die Anweisungen ein Computersystem veranlassen, das Verfahren nach einem der obigen Ansprüche durchzuführen.

13. Computersystem, umfassend den Datenträger nach Anspruch 12, wobei die Anweisung auf dem Datenträger das Computersystem veranlasst, das Verfahren nach einem der obigen Ansprüche durchzuführen.

## Revendications

1. Procédé mis en œuvre par ordinateur permettant de transférer un fichier d'un dispositif sécurisé vers un dispositif non sécurisé, comprenant :
un serveur qui reçoit une demande d'enregistrement en tant que client depuis le dispositif non sécurisé,
le serveur qui génère une identification client, ID, pour le dispositif non sécurisé,
le serveur qui envoie l'identifiant client du dispositif non sécurisé au dispositif non sécurisé,
le dispositif non sécurisé qui affiche un code de réponse rapide (QR) correspondant à l'identifiant client,
le dispositif sécurisé qui lit le code QR pour en extraire l'identifiant client,
le dispositif sécurisé qui envoie au moins un fichier au serveur avec l'identifiant client du dispositif non sécurisé,
le serveur qui envoie l'au moins un fichier au dispositif non sécurisé,
dans lequel l'au moins un fichier est chiffré de bout en bout, et dans lequel
la demande depuis le dispositif non sécurisé de s'enregistrer en tant que client comprend en outre la clé publique du dispositif non sécurisé, et dans lequel
les étapes du dispositif sécurisé envoyant un fichier au serveur avec l'identifiant client du dispositif non sécurisé et
le serveur envoyant l'au moins un fichier au dispositif non sécurisé comprennent les étapes suivantes :
le dispositif sécurisé qui demande et reçoit la clé publique du dispositif non sécurisé,
le dispositif sécurisé qui chiffre l'au moins un fichier à l'aide de la clé publique du dispositif non sécurisé,
le dispositif sécurisé qui envoie l'au moins un fichier chiffré au serveur avec l'identifiant client du dispositif non sécurisé, le serveur envoyant l'au moins un fichier chiffré au dispositif non sécurisé, et
le dispositif non sécurisé qui déchiffre l'au moins un fichier chiffré reçu à l'aide de sa clé privée.

2. Procédé selon la revendication 1, dans lequel l'au moins un fichier est un texte, une image, un modèle 3D, un fichier audio et/ou vidéo.

3. Procédé selon les revendications 2 ou 3, dans lequel le procédé ne comprend pas la fourniture d'identifiants de connexion ou d'informations remplaçant les identifiants de connexion permettant au dispositif non sécurisé de se connecter à un service, serveur ou autre dispositif, en particulier, dans lequel le procédé ne comprend pas une connexion au dispositif non sécurisé.

4. Procédé selon l'une quelconque des revendications précédentes, comprenant en outre l'accusé de réception du fichier par le dispositif non sécurisé au serveur et, en réponse, la suppression par le serveur de l'au moins un fichier sur le serveur.

5. Procédé selon l'une quelconque des revendications précédentes comprenant en outre l'affichage par le dispositif non sécurisé du contenu de l'au moins un fichier sur un écran connecté au dispositif non sécurisé ou contenu dans celui-ci.

6. Procédé selon l'une quelconque des revendications précédentes, comprenant en outre :
le dispositif sécurisé envoyant une demande au serveur pour supprimer l'au moins un fichier sur le dispositif non sécurisé,
le serveur envoyant au dispositif non sécurisé la demande de suppression de l'au moins un fichier, et
le dispositif non sécurisé supprimant l'au moins un fichier.

7. Procédé selon la revendication 1, dans lequel le serveur reçoit une demande d'au moins un ou plusieurs seconds dispositifs pour s'enregistrer en tant que client, et comprenant en outre :
le serveur qui fournit au dispositif sécurisé les clés publiques des dispositifs non sécurisés et les identifiants clients non sécurisés pour chacun des au moins un ou plusieurs seconds dispositifs,
le dispositif sécurisé qui fournit une paire de clés sécurisées temporaire pour un groupe comprenant au moins deux des identifiants clients non sécurisés,
le dispositif sécurisé qui chiffre la clé privée de la paire de clés sécurisées temporaires de groupe avec les clés publiques de chaque dispositif non sécurisé, créant ainsi un ensemble de clés privées chiffrées de la paire de clés sécurisées temporaire de groupe ;
le dispositif sécurisé qui chiffre l'au moins un fichier à l'aide de la clé publique de la paire de clés sécurisées temporaire du groupe,
le dispositif sécurisé envoie au serveur l'au moins un fichier chiffré avec la clé de groupe, ainsi que les identifiants clients du dispositif non sécurisé, l'identifiant du dispositif sécurisé, l'ensemble des clés privées chiffrées de la paire de clés sécurisées temporaires de groupe, et
chaque dispositif non sécurisé déchiffre au moins un fichier chiffré, après avoir déchiffré la clé privée du groupe

8. Procédé selon la revendication 1, dans lequel :
l'étape de lecture du code QR par le dispositif sécurisé pour extraire l'identifiant client du dispositif non sécurisé comprend :
le dispositif sécurisé qui demande au serveur d'être enregistré en tant que client d'un dispositif sécurisé, la demande contenant la clé publique du dispositif sécurisé,
le serveur qui génère un identifiant client pour le dispositif sécurisé, le serveur envoyant au dispositif sécurisé un identifiant client du dispositif sécurisé,
le dispositif sécurisé qui lit le code QR pour en extraire l'identifiant client du dispositif non sécurisé,
et dans lequel
les étapes du dispositif sécurisé envoyant un fichier au serveur avec l'identifiant client du dispositif non sécurisé et
au serveur envoyant l'au moins un fichier au dispositif non sécurisé comprennent les étapes suivantes :
le dispositif sécurisé qui demande et reçoit la clé publique du dispositif non sécurisé,
le dispositif sécurisé qui chiffre l'au moins un fichier à l'aide de la clé publique du dispositif non sécurisé,
le dispositif sécurisé qui envoie l'au moins un fichier chiffré au serveur avec l'identifiant client du dispositif non sécurisé et l'identifiant client du dispositif sécurisé,
le serveur qui envoie l'au moins un fichier chiffré au dispositif non sécurisé, et
le dispositif non sécurisé qui déchiffre l'au moins un fichier chiffré reçu à l'aide de sa clé privée comprenant l'identifiant client du dispositif sécurisé,
le dispositif non sécurisé qui demande et reçoit du serveur la clé publique du dispositif sécurisé, la demande contenant l'identifiant client du dispositif sécurisé,
le dispositif non sécurisé qui chiffre l'au moins un second fichier avec la clé publique du dispositif sécurisé,
le dispositif non sécurisé qui envoie l'au moins un second fichier chiffré au serveur avec l'identifiant client du dispositif sécurisé,
le serveur qui envoie l'au moins un second fichier chiffré au dispositif sécurisé, et
le dispositif sécurisé qui déchiffre l'au moins un second fichier modifié reçu à l'aide de sa clé privée comprenant l'identifiant client du dispositif sécurisé.

9. Procédé selon la revendication 8, dans lequel
dans lequel l'étape du dispositif non sécurisé demandant et recevant du serveur la clé publique du dispositif sécurisé, la demande contenant l'identifiant client du dispositif sécurisé, comprend :
la fourniture au dispositif non sécurisé d'au moins une version modifiée de l'au moins un fichier reçu, et
après la modification de l'au moins un fichier déchiffré, le dispositif non sécurisé demandant et recevant du serveur la clé publique du dispositif sécurisé, la demande contenant l'identifiant client du dispositif sécurisé,
et dans lequel l'au moins un second fichier est l'au moins un fichier modifié.

10. Procédé selon l'une quelconque des revendications précédentes, dans lequel une application sur le dispositif sécurisé est configurée pour recevoir et envoyer le fichier.

11. Procédé selon l'une quelconque des revendications précédentes, dans lequel, avant d'envoyer le fichier depuis le serveur au dispositif non sécurisé, le dispositif non sécurisé envoie une requête au serveur pour demander des fichiers désignés pour le dispositif non sécurisé et identifiés par l'identifiant client du dispositif non sécurisé.

12. Support de données contenant des instructions, les instructions amenant un système informatique à exécuter le procédé selon l'une quelconque des revendications ci-dessus.

13. Système informatique comprenant le support de données selon la revendication 12, l'instruction sur le support de données amenant le système informatique à exécuter le procédé selon l'une quelconque des revendications ci-dessus.
